**Europäisches Patentamt**

**European Patent Office**

**Office européen des brevets**

(19)

(11) Veröffentlichungsnummer : **0 516 708 B1**

(12)

# EUROPÄISCHE PATENTSCHRIFT

(45) Veröffentlichungstag der Patentschrift :
**21.12.94 Patentblatt 94/51**

(51) Int. Cl.⁵ : **F16J 15/32**, B60K 17/30

(21) Anmeldenummer : **91905023.7**

(22) Anmeldetag : **23.02.91**

(86) Internationale Anmeldenummer :
**PCT/EP91/00342**

(87) Internationale Veröffentlichungsnummer :
**WO 91/13277 05.09.91 Gazette 91/21**

(54) **DICHTUNGSANORDNUNG.**

(30) Priorität : **26.02.90 DE 4006014**

(43) Veröffentlichungstag der Anmeldung :
**09.12.92 Patentblatt 92/50**

(45) Bekanntmachung des Hinweises auf die
Patenterteilung :
**21.12.94 Patentblatt 94/51**

(84) Benannte Vertragsstaaten :
**DE IT**

(56) Entgegenhaltungen :
**DE-A- 3 642 082**
**US-A- 4 550 920**

(73) Patentinhaber : **ZF FRIEDRICHSHAFEN**
**Aktiengesellschaft**
**D-88038 Friedrichshafen (DE)**

(72) Erfinder : **KATZENSTEINER, Josef, Roman**
**Anton-Pötzl-Str. 12**
**D-8390 Passau (DE)**

## Beschreibung

Dichtungsanordnung mit Dichtungen für rotierende und lineare Bewegungen zum Abdichten eines Bauteils, z. B. einer Antriebswelle einer gelenkten Achse eines land- oder bauwirtschaftlich genutzten Fahrzeugs, die von einem Achsrohr durch einen Außenraum zu einem Endabtriebsgehäuse geführt ist, wobei die Dichtungen durch eine Hülse zu einem Dichtungssatz zusammengefaßt sind.

Dichtungsanordnungen der eingangs genannten Art sind vor allem bei land- und/oder bauwirtschaftlich genutzten Fahrzeugen anzutreffen. Hier finden sie beispielsweise in Lenk- und Starrachsen oder Getrieben Verwendung. Derartige Dichtungsanordnungen sind im praktischen Einsatz den widrigsten Bedingungen ausgesetzt. Bei der Reisernte werden landwirtschaftliche Erntemaschinen in nassem, schlammigem Gelände eingesetzt. Für diese Fahrzeuge geeignete Dichtungsanordnungen müssen eine einwandfreie Abdichtung unter schwierigen äußeren Bedingungen gewährleisten. Dabei soll aber der Aufwand für deren Herstellung, Montage und Ersatzteilhaltung niedrig sein.

Bei einer bekannten Dichtungsanordnung (Prospekt der Firma Carraro: "Achsen und Triebwerke", Impressum: 115256-09/87) ist zur Abdichtung der Achsbrücke eine Dichtungsanordnung derart aufgebaut, daß ein Abstreifer und ein Wellendichtring den axial beweglichen Teil eines Doppelkreuzgelenks konzentrisch dichtend umgeben. Eine derartige Dichtungsanordnung ist zwar einfach aufgebaut und kostengünstig zu realisieren, jedoch ist eine hohe Lebensdauer unter den geschilderten extremen Einsatzbedingungen nicht gewährleistet.

Der Erfindung liegt die Aufgabe zugrunde, eine Dichtungsanordnung zu schaffen, die unter Beibehaltung eines einfachen Aufbaus eine ausreichend hohe Lebensdauer auch unter extremen Einsatzbedingungen gewährleistet.

Die der Erfindung zugrundeliegende Aufgabe wird dadurch gelöst, daß die Dichtungen mit außenliegenden Dicht- und Abstreifelementen an einer Laufbuchse anliegen, die ortsfest mit der Wandung verbunden ist. Durch die feste Verbindung der Hülse der Dichtungsanordnung mit dem Bauteil, z. B. einer Achshalbwelle einer Lenkachse eines landwirtschaftlichen Fahrzeugs, wird der Schmutz beim Einlenken der lenkbaren Räder nicht unmittelbar in Richtung auf die Dichtungsanordnung geführt, sondern die Dichtungsanordnung bewegt sich zur Achsmitte hin und weicht damit dem Schmutz aus. Mit dem erfindungsgemäßen Konstruktionsprinzip läßt sich die Beschädigungsgefahr durch festgebackenen Schmutz (Erde, Lehm) bzw. Eis ausschließen, da anhaftende Partikel in gleichbleibender Position vom Bauteil mitgenommen und nicht gegen eine feststehende Dichtung geschoben werden.

Ein weiteres vorteilhaftes Merkmal der Erfindung besteht darin, daß die Hülse einen Bund aufweist, der dem Außenraum zugekehrt ist. Der Bund der Hülse erfüllt die Funktion eines Abstreifers für Schmutz. Dieser Abstreifer ist wirksam, wenn die eingeschlagenen Lenkräder in ihre der Geradeausfahrt entsprechenden Position zurückgeführt werden. Besonders wirksam ist der Abstreifer in den Fällen, in denen das Fahrzeug mit eingeschlagenen Lenkrädern abgestellt wurde und es zu Schmutzverkrustungen im Außenraum im Bereich der Dichtungsanordnung gekommen ist. Auf diese Weise werden angetrocknete Verunreinigungen (Erde, Lehm oder dergleichen oder auch Eis) zuverlässig aus dem Bereich der Dichtungsanordnung entfernt, sobald das Fahrzeug in Betrieb genommen wird und die eingeschlagenen Lenkräder in die Geradeausfahrtstellung überführt werden.

Durch die Gestaltung des Bundes der Hülse läßt sich zusätzlich die Schleuderwirkung beeinflussen. Besonders vorteilhaft ist es, wenn der Bund einen schräg in Richtung auf den Außenraum gerichteten Rand aufweist. Durch diesen Kragen wird eine hohe Schleuderwirkung erzielt.

Die erfindungsgemäße Dichtungsanordnung eignet sich in erster Linie zum Abdichten einer Antriebswelle einer gelenkten Achse eines land- oder bauwirtschaftlich genutzen Fahrzeugs, die von einer Achsbrücke, d. h. einem Innenraum, durch einen Außenraum, in dem das Doppelkreuzgelenk umläuft, zu einem Radkopf geführt ist. Bei dieser Anordnung verlagert sich die Hülse bei Einleitung einer Lenkbewegung aus ihrer der Geradeausfahrt entsprechenden Relativlage bezüglich des Außenraums in Richtung auf den Innenraum. Eine besonders hohe Lebensdauer und Dichtwirkung der Dichtungsanordnung läßt sich dann erzielen, wenn der Wellendichtring zwei Dichtlippen und der Abstreifer zumindest eine Abstreiflippe aufweist, wobei - bezogen auf die Längsrichtung des Bauteils (der Antriebswelle) - die Einzelabstände der Dicht- und Abstreiflippen voneinander größer als der lineare Verschiebeweg des Bauteils sind. Bei dieser Anordnung hat jede Dicht- und Abstreiferlippe eine eigene Laufspur. Der Verschleiß der Dichtungsanordnung ist gering, da kein "Überfahren" der Laufspuren eintritt, weil der axiale Verschiebeweg des Bauteils, z. B. der Antriebswelle, geringer ist als die Abstände der Dicht- und Abstreiferlippen.

Die Laufbuchse kann kostengünstig durch ein Tiefziehteil, dessen Innenzylinder fertig gezogen oder bedarfsweise geschliffen ist, bereitgestellt werden. In diesem Zusammenhang ist es ebenfalls vorteilhaft, die Verschleißfestigkeit der Laufbuchse durch geeignete Behandlungsverfahren zu steigern. Zur Erhöhung der Verschleißfestigkeit können Einsatz- oder Vergütungsstähle eingesetzt werden, die einsatz- oder induktivgehärtet sind. Die Oberfläche der Laufbuchse kann durch Bonder- oder Nitrierverfahren oder durch galvanische Oberflächenbeschichtung besonders widerstandsfähig gemacht werden.

Da die Laufbuchse beim Austausch der Dichtungsanordnung erneuert werden muß, ist es vorteilhaft, die Laufbuchse mit einem Abziehkragen zu versehen. Dieser kann zwei Gewindebohrungen aufweisen, die das Abziehen durch Einschrauben von Gewindebolzen wesentlich erleichtern. Die Laufbuchse kann eine elastische Außenbeschichtung aufweisen, wodurch in erster Linie eine dichte Verbindung mit der Wandung, z. B. der Bohrung in einer Achsbrücke, gewährleistet ist.

Wenn die Antriebswelle im Bereich der Wandung in einer Lagerbuchse gelagert ist, ist es besonders vorteilhaft, am Außendurchmesser der Lagerbuchse mindestens eine Nut vorzusehen, die mit dem Innenraum der Achsbrücke in Verbindung steht. Diese Maßnahme bewirkt, daß kein Druckaufbau und kein Unterdruck an den Dichtungen der Dichtungsanordnung bei Axialverschiebungen stattfindet. Die Nut bewirkt einen Druckausgleich zwischen dem Raum der Dichtungsanordnung und dem Innenraum der Achsbrücke. Letzterer ist über ein Entlüftungsventil entlüftet.

Eine stabile Halterung des Abstreifers ergibt sich, wenn dieser einerseits am Bund und andererseits an einem Steg eines Stützwinkels anliegt. Der dem Außenraum zugekehrte Bund der Hülse kann auch durch einen Stützring gebildet sein, der so mit der Hülse fest verbunden ist, daß ein Steg dem Außenraum zugekehrt ist. Der Stützring, der den Abstreifer stabilisiert, erfüllt somit eine Doppelfunktion.

Eine besonders kostengünstige Dichtungsanordnung läßt sich nach einem weiteren vorteilhaften Merkmal der Erfindung dadurch erreichen, daß die einzelnen Dichtungen baugleiche Dichtringe sind. Zweckmäßigerweise bilden zwei Dichtringe ein V-förmiges Dichtelement, das mit einem weiteren, mit axialem Abstand angeordneten Dichtring den Dichtungssatz bildet. Ein Dichtring des V-förmigen Dichtelements bildet den Abstreifer, während die übrigen Dichtringe die Dichtelemente für die rotierende Bewegung bilden.

Weitere wesentliche Merkmale der Erfindung und die daraus resultierenden Vorteile sind der nachfolgenden Beschreibung mehrerer Ausführungsbeispiele anhand der Zeichnungen zu entnehmen.

Es zeigen:

| | |
|---|---|
| Fig. 1 | die schematische Darstellung des oberen Teils einer angetriebenen Achse im Längsschnitt, |
| Fig. 2 und 2A | eine erste Dichtungsanordnung im Bereich einer Wandung der Achse nach Fig. 1, |
| Fig. 3 und Fig. 4 | weitere Dichtungsanordnungen, |
| Fig. 5 | die schematische Darstellung einer einzelnen Dichtung im Längsschnitt, |
| Fig. 6 | eine teilweise Vorderansicht der Dichtung nach Fig. 5, |
| Fig. 7 und Fig. 8 | weitere Dichtungsanordnungen. |

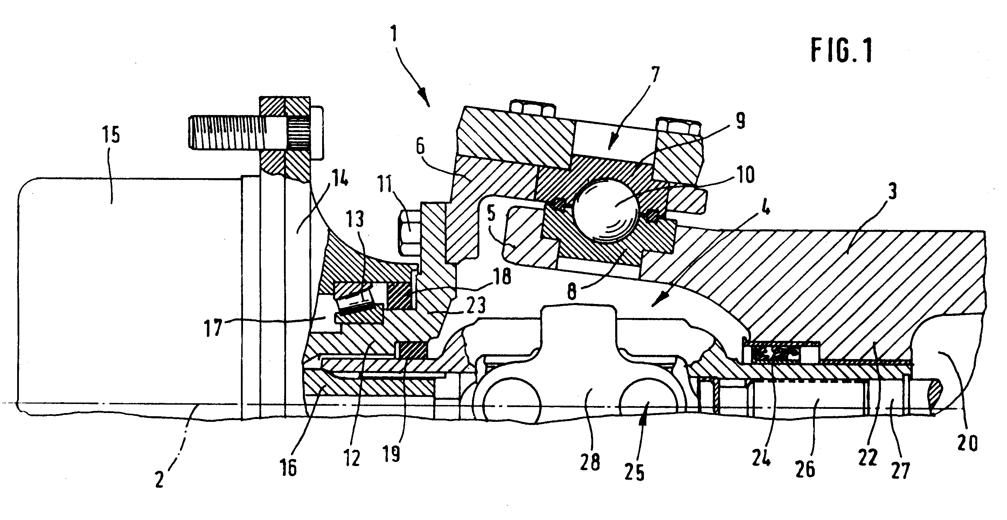

In Fig. 1 ist eine angetriebene Achse 1 eines selbst nicht dargestellten land- und/oder bauwirtschaftlich genutzten Fahrzeugs teilweise dargestellt. Die Abbildung zeigt einen schematischen Längsschnitt durch den oberen Teil der Achse 1.

Angaben über die räumliche Anordnung bzw. Erstreckung einzelner Bauteile sind, soweit im einzelnen nicht ausdrücklich zusätzlich erläutert, wie folgt zu verstehen:

| | |
|---|---|
| "links" | = in der Zeichnung links liegend, |
| "rechts" | = in der Zeichnung rechts liegend, |
| "oben" | = in der Zeichnung oben liegend, |
| "unten" | = in der Zeichnung unten liegend, |
| "außen" bzw. "äußere" | = sich radial von einer Längsmittellinie 2 weg erstreckend und |
| "innen" bzw. "innere" | = sich zur Längsmittellinie 2 hin erstreckend |

Ein feststehendes Achsrohr 3 geht an seinem links liegenden Ende in einen Gelenkkopf 4 über. Der Gelenkkopf 4 kann gabelförmig oder kugelförmig ausgebildet sein. Der obere Schenkel 5 ist aus der Zeichnung ersichtlich.

Gegenüber dem feststehenden Achsrohr 3 ist ein Gelenkgehäuse 6 über zwei Achsschenkellager, von denen das obere Achsschenkellager 7 abgebildet ist, schwenkbeweglich gelagert. Das Achsschenkellager 7 wird aus einer unteren Kugelschale 8 und einer oberen Kugelschale 9 und einer Kugel 10 gebildet.

Am Gelenkgehäuse 6 ist mit Hilfe von Schrauben 11 ein Nabenträger 12 angeflanscht. Auf dem Nabenträger 12 ist über ein Kegelrollenlager 13 eine Radnabe 14 drehbar gelagert. Die Radnabe 14 ist mit einem etwa topfförmigen Endabtriebsgehäuse 15 drehfest verbunden. Im Inneren des Endabtriebsgehäuses 15 ist ein selbst nicht dargestelltes Reduktionsgetriebe, zum Beispiel ein Planetengetriebe, untergebracht. Von diesem Reduktionsgetriebe ragt eine Sonnenradwelle 16 nach rechts aus dem Endabtriebsgehäuse 15. Der durch die Radnabe 14 begrenzte Innenraum 17 des Endabtriebsgehäuses 15 ist nach außen über zwei Dichtungen 18 und 19 abgedichtet. Die Dichtung 18 ist drehfest in der Radnabe 14 und die Dichtung 19 ist drehfest in der Hohlachse 12 untergebracht.

Das Achsrohr 3 weist einen Innenraum 20 auf. Zwischen dem Innenraum 17 des Endabtriebsgehäuses 15 und dem Innenraum 20 des Achsrohrs 3 befindet sich ein Außenraum 21, der nach außen im wesentlichen offen ist und durch den Gelenkkopf 4 und das Gelenkgehäuse 6 begrenzt wird.

Der Außenraum 21 ist durch eine Wandung 22 des Achsrohrs 3 vom Innenraum 20 des Achsrohrs 3 einerseits und andererseits von einer Wandung 23 der Hohlachse 12 vom Innenraum 17 des Endabtriebsgehäuses 15 getrennt.

Im dargestellten Ausführungsbeispiel nach Fig. 1 ist innerhalb der Wandung 22 eine Dichtungsanordnung 24 zum Abdichten eines Bauteils 25 vorgesehen. Das Bauteil 25 ist vom Innenraum 20 des Achsrohrs 3 zum Außenraum 21 bzw. vom Innenraum 17 des Endabtriebsgehäuses 15 zum Außenraum 21 geführt. Das Bauteil 25 führt rotierende und lineare Bewegungen aus.

Im Falle der beschriebenen lenkbaren Achse 1 für ein landwirtschaftliches Fahrzeug handelt es sich bei dem Bauteil 25 um eine Antriebswelle 26. Die Antriebswelle 26 setzt sich aus mehreren Teilen zusammen und stellt eine Antriebsverbindung von einem selbst nicht dargestellten Ausgleichsgetriebe zum angetriebenen Endabtriebsgehäuse 15 her. Die Antriebswelle 26 besteht im einzelnen aus einer Achsbalbwelle 27, einem Doppelkreuzgelenk 28 und der bereits erwähnten Sonnenradwelle 16. Die das Endabtriebsgehäuse 15 treibende Antriebswelle 26 rotiert während des Betriebs. Dieser Rotationsbewegung ist eine Verschiebebewegung in Axialrichtung (in Richtung der Längsmittellinie 2) überlagert, die eine Folge der Schwenkbewegungen des Gelenkgehäuses 6 beim Lenken ist.

Bei dem Ausführungsbeispiel nach Fig. 1 ist die Sonnenradwelle 16 in Axialrichtung feststehend angeordnet. Demzufolge tritt bei Lenkbewegungen auf der Antriebsseite des Doppelkreuzgelenks 28, das heißt auf der rechten Seite des Doppelkreuzgelenks 28, eine axiale Verschiebebewegung auf. Die Achshalbwelle 27 wird nach rechts verschoben, wenn die Räder aus der Geradeausfahrtstellung, wie abgebildet, eingelenkt werden. Die gezeigte Anordnung kann jedoch ohne weiteres so abgewandelt werden, daß die Achshalbwelle 27 feststehend gelagert ist und keine axiale Verschiebebewegung ausführt. Die axiale Verschiebebewegung tritt dann auf der gegenüberliegenden Seite des Doppelkreuzgelenks 28 auf. In diesem Fall wäre die Dichtungsanordnung 24 auf dieser Seite vorzusehen.

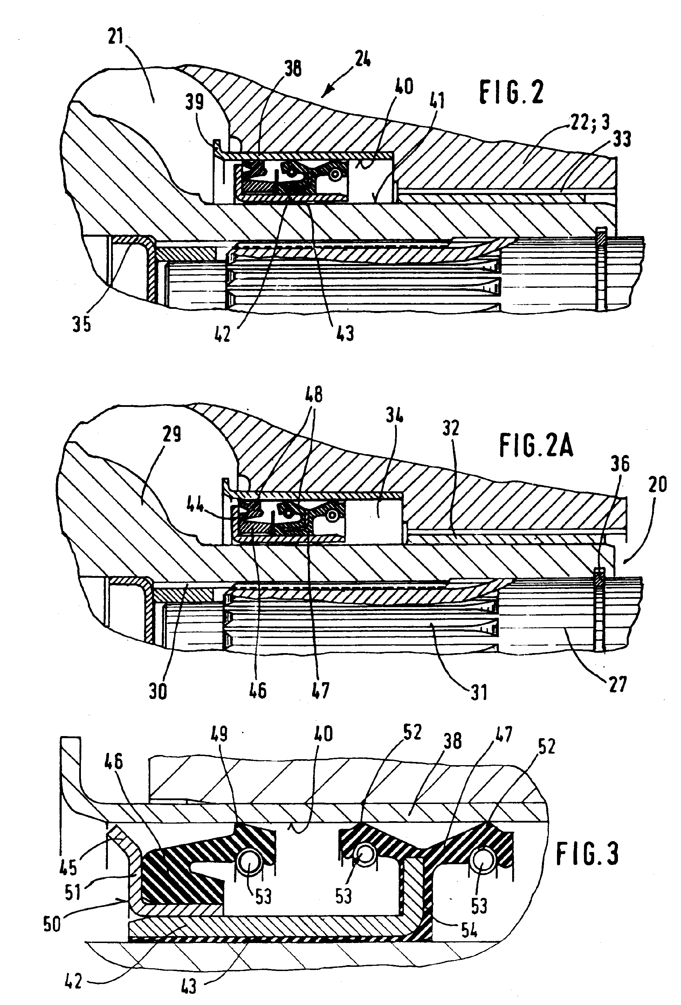

Der Abbildung entsprechend Fig. 2 und 2A sind weitere Einzelheiten der Anordnung im Bereich der Wandung 22 des Achsrohrs 3 zu entnehmen. Eine antriebsseitige Gabelhülse 29 des Doppelkreuzgelenks 28 weist ein Zahnnabenprofil 30 auf, das mit einem Zahnwellenprofil 31 der Achshalbwelle 27 eine drehfeste Verbindung zwischen dem Doppelkreuzgelenk 28 und der Achshalbwelle 27 herstellt. Die Gabelhülse 29 ist im Bereich der Wandung 22 in einer Lagerbuchse 32 drehbar und axial verschiebbar gelagert. Die Laufbuchse 32 bzw. die Wandung 22 weist eine axial gerichtete Nut 33 auf. Die Nut 33 stellt eine Verbindung zwischen einem Ringraum 34 und dem Innenraum 20 des Achsrohrs 3 her. Die Nut 33 bewirkt einen Druckausgleich zwischen dem Ringraum 34 und dem Innenraum 20.

Die Gabelhülse 29 ist im Bereich ihres Zahnnabenprofils 30 zum Außenraum 21 hin durch einen Deckel 35 verschlossen. Ein Sicherungsring 36 ist vorgesehen, um die Gabelhülse 29 auf der Achshalbwelle 27 in Axialrichtung festzulegen. Die Gabelhülse 29 und die Achshalbwelle 27 können auch einstückig ausgebildet sein.

Im folgenden wird der Aufbau und die Funktion der Dichtungsanordnung 24 zum Abdichten des Bauteils 25, das durch die Wandung 22 von einem Innenraum 20 zu einem Außenraum 21 geführt ist und rotierende und lineare Bewegungen ausführt, näher erläutert:

In eine Bohrung 37 der Wandung 22 ist eine Laufbuchse 38 fest, jedoch bedarfsweise auswechselbar eingesetzt. Das dem Außenraum 21 zugekehrte Ende der Laufbuchse 38 ist als Abziehkragen 39 ausgebildet. Der Abziehkragen 39 erleichtert den Austausch der Laufbuchse 38 und kann zu diesem Zweck mit zwei Gewindebohrungen, die sich diametral gegenüberliegen und in Längsrichtung verlaufen, versehen sein.

Die Laufbuchse 38 ist ein Tiefziehteil, dessen Innenzylinder 40 fertig gezogen oder geschliffen ist. Die Verschleißfestigkeit der Laufbuchse 38 ist in vorteilhafter Weise durch geeignete Behandlungsverfahren gesteigert. Hierzu kann die Laufbuchse 38 einsatz- oder induktionsgehärtet, gebondert oder nitrocarburiert oder prägepoliert sein. Die Gabelhülse 29 weist einen Außenzylinder 41 auf, dessen Mantelfläche vorzugsweise geschliffen ist. Auf diesem Außenzylinder 41 ist eine Hülse 42 der Dichtungsanordnung 24 in bezug auf das Bauteil 25 (Gabelhülse 29 und Achshalbwelle 27) feststehend angeordnet. In diesem Zusammenhang ist es vorteilhaft, die Hülse 42 mit einer - zumindest teilweisen - Gummierung 43 zu versehen. Die Gummierung bewirkt eine dichtende Anlage der Hülse 42 auf dem Außenzylinder 41 der Gabelhülse 29. Anstelle der Gummierung 43 kann ein handelsüblicher Dichtlack bzw. eine Dichtmasse Verwendung finden. Die beschriebene Anordnung hat ferner den Vorteil, daß der Durchmesser des Außenzylinders 41 über seine gesamte axiale Länge gleich groß sein kann. Dieser gleichbleibende Durchmesser erleichtert die Montage der Hülse 42 und die Lagerung der Gabelhülse 29.

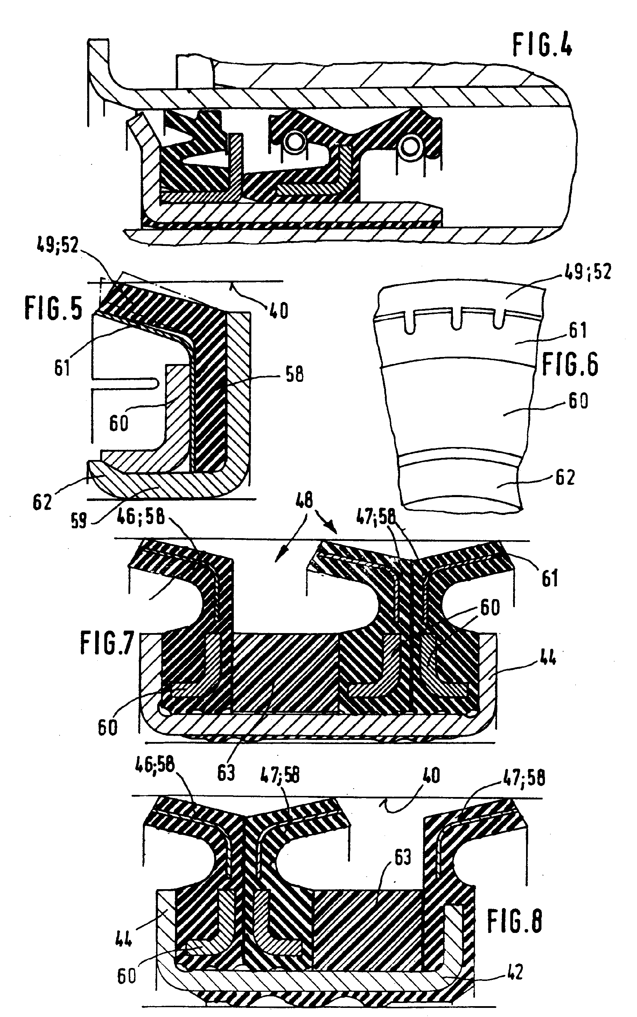

Die Hülse 42 weist einen Bund 44 auf, der dem Außenraum 21 zugekehrt ist. Der Außendurchmesser des Bundes 44 ist geringfügig kleiner als der Durchmesser des Innenzylinders 40 der Laufbuchse 38. Der Bund 44 kann einen schräg in Richtung auf den Außenraum 21 gerichteten Rand 45 aufweisen (vgl. Fig. 3 und 4).

Einzelne Dichtungen 46 und 47 werden durch die Hülse 42 zu einem Dichtungssatz 48 zusammengefaßt. Die Dichtung 46, die dem Außenraum 21 zugekehrt ist, wird aus einem Abstreifer gebildet, während die Dichtung 47, die dem Innenraum zugekehrt ist, aus einem Wellendichtring besteht.

Die anhand der Fig. 1, 2 und 2A vorstehend erläuterte Dichtungsanordnuno 24 dient zum Abdichten der Antriebswelle 26 (Achshalbwelle 27, Doppelkreuzgelenk 28 und Sonnenradwelle 16) einer gelenkten Achse 1 eines landwirtschaftlich genutzten Fahrzeugs. Die Antriebswelle 26 ist von einem Achsrohr 3 durch einen Außenraum 21 zu einem Endabtriebsgehäuse 15 geführt. Die Hülse 42 verlagert sich bei Einleitung einer Lenkbewegung aus ihrer der Geradeausfahrt entsprechenden Relativlage bezüglich des Außenraums 21, die den Abbildungen nach den Fig. 1 und 2 entspricht, in Richtung auf den Innenraum 20 des Achsrohrs 3. Bei den Dichtungen 46 und 47 des Dichtungssatzes 48 der Dichtungsanordnung 24 handelt es sich um Dichtungen mit außenliegenden Dicht- und Abstreifelementen, die am Innenzylinder 40 der Laufbuchse 38 dichtend anliecen. Es ist ohne weiteres ersichtlich, daß beim Einleiten einer Lenkbewegung keine Axialverschiebung der Antriebswelle 26 gegen feststehende Dichtungen erfolgt. Die vorgeschlagene Dichtungsanordnung 24 stellt vielmehr eine Abkehr vom üblichen Konstruktionsprinzip dar. Beim Einleiten einer Lenkbewegung weicht der Dichtungssatz 48, da er die axiale Verschiebebewegung mit ausführt - vom Außenraum 21 weggerichtet - in Richtung auf den Innenraum 20 des Achsrohres 3 aus. Vereinfacht ausgedrückt ist die Dichtungsanordnung 24 so beschaffen, daß der Dichtungssatz 48 dem Schmutz, der sich erfahrungsgemäß im Bereich der Gabelhülse 29 im Außenraum 21 ansammelt, aus. Beim Rücklenken der Räder besorgt der Bund 44 der Hülse 42 ein Abstreifen des Grobschmutzes, während die als Abstreifer ausgestaltete Dichtung 46 den Innenzylinder 40 der Laufbuchse 38 vollständig säubert. Um die Lebensdauer des Dichtungssatzes 48 zu erhöhen, ist es vorteilhaft, den Raum zwischen den Dichtungen 46 und 47 und den Dichtlippen 52 mit Langzeitfett mit vorzugsweise hohem Tropfpunkt zu füllen. Diese Lebensdauerschmierung wird bei der Montage des Dichtungssatzes 48 vorgenommen.

Die Wirkung des Bundes 44 der Hülse 42 als Abstreifer ist auch dann besonders vorteilhaft, wenn das Fahrzeug mit eingeschlagenen Rädern abgestellt wurde und es durch Abtrocknung bzw. durch frierende Nässe zu Schmutzverkrustungen gekommen ist.

In Fig. 3 sind Einzelheiten eines weiteren Ausführungsbeispiels einer Dichtungsanordnung 24 zu entnehmen. Die als Abstreifer ausgebildete Dichtung 46 weist eine in Richtung auf den Innenzylinder 40 der Laufbuchse 38 federbelastete Abstreiflippe 49 auf. Zur Versteifung der Dichtung ist ein Stützring 50 vorgesehen, der auf den Außendurchmesser der Hülse 42 aufgepreßt ist. Der vertikal gerichtete Steg 51 übernimmt die Funktion des Bundes 44.

Die Dichtung 47 ist als Wellendichtring mit außenliegenden Dichtlippen 52 ausgebildet. Jeweils eine Druckfeder 53 bewirkt eine federbelastete Anlage der Dichtlippen 52 am Innenzylinder 40 der Laufbuchse 38.

Wie aus der Zeichnungs ersichtlich, kann der Wellendichtring 47 einstückig mit der Hülse 42 gefertigt sein. In diesem Fall geht ein elastischer Bodenmantel 54 des Wellendichtrings in die elastische Innenbeschichtung (Gummierung 43) der Hülse 42 über. Die Ringräume, die - bezogen auf den Innenzylinder 40 der Laufbuchse 38 - zwischen der Abstreiflippe 49 und der Dichtlippe 52 bzw. den beiden Dichtlippen 52 des Radialwellendichtrings begrenzt werden, sind mit Langzeitschmierfett gefüllt.

Die in Fig. 4 wiedergegebene Dichtungsanordnung 24 stimmt im wesentlichen mit derjenigen nach Fig. 2 überein. Die als Abstreifer ausgestaltete Dichtung 46 wird durch einen Stützring 55 versteift. Der Stützring 55 untergreift den Abstreifer im Bereich des Außendurchmessers der Hülse 42 und stützt ihn mit einem vertikal gerichteten Schenkel 56 zusätzlich ab. Der Radialwellendichtring weist zur Versteifung einen weiteren Stützring 57 auf.

Weitere, vorteilhafte Ausgestaltungen der Dichtungsanordnung 24 gehen von der Überlegung aus, daß die einzelnen Dichtungen 46 bzw. 47 aus baugleichen Dichtringen 58 zusammengefügt sein können. Der grundsätzliche Aufbau eines Dichtrings 58, mit dem dieser Überlegung Rechnung getragen wird, ist der Fig. 5 zu entnehmen. Der Dichtring 58 wird von einem Gehäuse 59 aufgenommen. Bei diesem Gehäuse 59 kann es sich um ein separates Bauteil handeln, jedoch kann dieses Gehäuse auch von der Hülse 42 gebildet werden. Ein Stützring 60 sorgt für eine ausreichende Versteifung des Dichtrings 58. Die elastische Anlage der Abstreiflippe 49 bzw. der Dichtlippe 52 am Innenzylinder 40 der Laufbuchse 38 wird durch eine Lamellenfeder 61 sichergestellt. Bei der Montage wird zunächst die Dichtung 58 auf das Gehäuse 59 geschoben. Anschließend wird die Lamellenfeder 61 aufgelegt. Schließlich wird der Stützring 60 hinzugefügt und die Anordnung durch Umbördelung des Randes 62 geschlossen. Für den Fall, daß es sich bei dem Gehäuse 59 um ein separates Bauteil handelt, wird der Dichtungssatz 48 aus drei Dichtringen 58 gebildet, die durch die Hülse 42 zusammengefaßt werden. Eine vergleichbare Anordnung ist der Abbildung entsprechend Fig. 7 zu entnehmen. Die Hülse 42 weist zwei Bunde 44 auf, die die Dichtringe 58 zum Dichtungssatz 48 zusammenfassen. Die als Abstreifer ausgebildete Dichtung 46 und die Dichtung 47, die als Radialwellendichtring wirkt, sind durch einen Abstandshalter 63 voneinander getrennt. Abweichend vom Ausführungsbeispiel nach Fig. 5 handelt es sich bei den Stützringen 60 und den Lamellenfedern 61 nicht um gesonderte Bauteile. Diese Elemente sind integrierte Bestandteile der Dichtringe 58. Die Dichtringe 58 lassen sich somit besonders kostengünstig herstellen.

Die Dichtungsanordnung 24 nach Fig. 8 verdeutlicht, daß weitere bauliche Abwandlungen möglich sind, ohne daß das Prinzip der Erfindung verlassen wird. Bei dieser Dichtungsanordnung übernimmt die Dichtung 46 die Funktion des Abstreifers, während die rechts von ihr befindlichen Dichtringe 58 die Aufgabe des Radialwellendichtrings übernehmen. Der rechts außenliegende Dichtring 58 ist einstückig mit der Hülse 42 gefertigt. Der Abstandshalter 63 befindet sich zwischen den Dichtringen 58.

Bezugszeichen

| 1 | Achse | | 36 | Sicherungsring |
|---|---|---|---|---|
| 2 | Längsmittellinie | | 37 | Bohrung |
| 3 | Achsrohr | | 38 | Laufbuchse |
| 4 | Gelenkkopf | | 39 | Abziehkragen |
| 5 | Schenkel | | 40 | Innenzylinder |
| 6 | Gelenkgehäuse | | 41 | Außenzylinder |
| 7 | oberes Achsschenkellager | | 42 | Hülse |
| 8 | untere Kugelschale | | 43 | Gummierung |
| 9 | obere Kugelschale | | 44 | Bund |
| 10 | Kugel | | 45 | Rand |
| 11 | Schrauben | | 46 | Dichtung |
| 12 | Nabenträger | | 47 | Dichtung |
| 13 | Kegelrollenlager | | 48 | Dichtungssatz |
| 14 | Radnabe | | 49 | Abstreiflippe |
| 15 | Endabtriebsgehäuse | | 50 | Stützring |
| 16 | Sonnenradwelle | | 51 | Steg |
| 17 | Innenraum | | 52 | Dichtlippe |
| 18 | Dichtring | | 53 | Druckfedern |
| 19 | Dichtring | | 54 | Bodenmantel |
| 20 | Innenraum | | 55 | Stützring |
| 21 | Außenraum | | 56 | Schenkel |
| 22 | Wandung | | 57 | Stützring |
| 23 | Wandung | | 58 | Dichtring |
| 24 | Dichtungsanordnung | | 59 | Gehäuse |
| 25 | Bauteil | | 60 | Stützring |
| 26 | Antriebswelle | | 61 | Lamellenfeder |
| 27 | Achshalbwelle | | 62 | Rand |
| 28 | Doppelkreuzgelenk | | 63 | Abstandshalter |
| 29 | Gabelhülse | | | |
| 30 | Zahnnabenprofil | | | |
| 31 | Zahnwellenprofil | | | |
| 32 | Lagerbuchse | | | |
| 33 | Nut | | | |
| 34 | Ringraum | | | |
| 35 | Deckel | | | |

**Patentansprüche**

1. Dichtungsanordnung (24) mit Dichtungen (46, 47) für rotierende und lineare Bewegungen zum Abdichten eines bewegbaren Bauteils (25), z. B. einer Antriebswelle (26), einer gelenkten Achse (1) eines land- oder bauwirtschaftlich genutzten Fahrzeugs, welches Bauteil (25) von einem Achsrohr (3) durch einen Außenraum (21) zu einem Endabtriebsgehäuse (15) geführt ist, wobei die Dichtungen (46, 47) durch eine Hülse (42) zu einem Dichtungssatz (48) zusammengefaßt sind, dadurch **gekennzeichnet,** daß der Dichtungasatz (48) mit dem bewegbaren Bauteil (25) fest verbunden ist, daß die Dichtungen (46, 47) mit außenliegenden Dicht- und Abstreiflippen (52, 49) an einer Laufbuchse (38) anliegen, die ortsfest mit dem Achsrohr (3) verbunden ist, so daß sich der Dichtungssatz (48) bei Einleitung einer Lenkbewegung aus ihrer der Geradeausfahrt entsprechenden Relativlage bezüglich des Außenraums (21) in Richtung auf den Innenraum (20) verlagert.

2. Dichtungsanordnung nach Anspruch 1, dadurch **gekennzeichnet,** daß die Hülse (42) einen Bund (44) aufweist, der dem Außenraum (21) zugekehrt ist.

3. Dichtungsanordnung nach Anspruch 2, dadurch **gekennzeichnet,** daß der Bund (44) einen schräg in Richtung auf den Außenraum (21) gerichteten Rand (45) aufweist.

4. Dichtungsanordnung nach Anspruch 1, dadurch **gekennzeichnet,** daß der Dichtungssatz (48) aus einem Abstreifer (46), der dem Außenraum (21) zugekehrt ist, und einem Wellendichtring (47), der dem Innenraum (20) und dem Außenraum (21) zugekehrt ist, gebildet ist.

5. Dichtungsanordnung nach Anspruch 1, dadurch **gekennzeichnet,** daß die Hülse (42) eine elastische Innenbeschichtung (Gummierung 43) aufweist.

6. Dichtungsanordnung zum Abdichten einer Antriebswelle (26) einer gelenkten Achse (1) eines land- oder bauwirtschaftlich genutzten Fahrzeugs, die von einem Achsrohr (3) durch einen Außenraum (21) zu einem Endabtriebsgehäuse (15) geführt ist nach Anspruch 1, dadurch **gekennzeichnet,** daß sich die Hülse (42) bei Einleitung einer Lenkbewegung aus ihrer der Geradeausfahrt entsprechenden Relativlage bezüglich des Außenraums (21) in Richtung auf den Innenraum (17 bzw. 20) verlagert.

7. Dichtungsanordnung nach den Ansprüchen 1 und 4, dadurch **gekennzeichnet,** daß der Wellendichtring (47) zwei Dichtlippen (52) und der Abstreifer (46) zumindest eine Abstreiflippe (49) aufweist, und daß - bezogen auf die Längsrichtung des Bauteils (25) - die Abstände der Dicht- und Abstreiflippen (52, 49) größer als der lineare Verschiebeweg des Bauteils (25) ist.

8. Dichtungsanordnung nach Anspruch 1, dadurch **gekennzeichnet,** daß die Laufbuchse (38) ein Tiefziehteil ist, dessen Innenzylinder (40) fertig gezogen, geschliffen oder gedreht und prägepoliert ist.

9. Dichtungsanordnung nach Anspruch 8, dadurch **gekennzeichnet,** daß die Verschleißfestigkeit der Laufbuchse (38) durch geeignete Behandlungsverfahren gesteigert ist.

10. Dichtungsanordnung nach Anspruch 1, dadurch **gekennzeichnet,** daß die Laufbuchse (38) einen Abziehkragen (39) aufweist.

11. Dichtungsanordnung nach Anspruch 10, dadurch **gekennzeichnet,** daß der Abziehkragen (39) zumindest zwei Gewindebohrungen aufweist.

12. Dichtungsanordnung nach Anspruch 8, dadurch **gekennzeichnet,** daß die Laufbuchse (38) eine elastische Außenbeschichtung aufweist.

13. Dichtungsanordnung nach Anspruch 6, dadurch **gekennzeichnet,** daß die Antriebswelle (26) im Bereich der Wandung (22) in einer Lagerbuchse (32) gelagert ist, die eine Nut (33) mit einer Verbindung zum Innenraum (20 bzw. 17) aufweist.

14. Dichtungsanordnung nach den Ansprüchen 1 und 2 und 4, dadurch **gekennzeichnet,** daß der Abstreifer (46) - bezogen auf den Längsquerschnitt der Hülse (42) - einerseits am Bund (44) und andererseits an einem Schenkel (56) eines Stützrings (55) anliegt.

15. Dichtungsanordnung nach Anspruch 14, dadurch **gekennzeichnet,** daß der Stützring (55) auf die Hülse (42) geschoben ist und den Abstreifer (46) untergreift.

16. Dichtungsanordnung nach Anspruch 2, dadurch **gekennzeichnet,** daß der Bund (44) durch einen Stützring (50) gebildet ist, der so mit der Hülse (42) fest verbunden ist, daß ein Steg (51) dem Außenraum (21) zugekehrt ist.

17. Dichtungsanordnung nach den Ansprüchen 1 oder 16, dadurch **gekennzeichnet,** daß der Wellendichtring (47) einstückig mit der Hülse (42) gefertigt ist.

18. Dichtungsanordnung nach den Ansprüchen 5 und 17, dadurch **gekennzeichnet,** daß ein Bodenmantel (54) des Wellendichtrings (47) in die elastische Innenbeschichtung (Gummierung 43) übergeht.

19. Dichtungsanordnung nach den Ansprüchen 1 bis 3 und 6, dadurch **gekennzeichnet,** daß die einzelnen Dichtungen (46, 47) baugleiche Dichtringe (58) sind.

20. Dichtungsanordnung nach Anspruch 19, dadurch **gekennzeichnet,** daß zwei Dichtringe (58) eine V-förmige Dichtung (47 bzw. 46 und 58) bilden, die mit einem weiteren, mit axialem Abstand angeordneten Dichtring (58) den Dichtungssatz (48) bildet.

21. Dichtungsanordnung nach Anspruch 19, dadurch **gekennzeichnet,** daß die Dicht- und Abstreiflippen (52, 49) der Dichtringe (58) durch je eine Lamellenfeder (61) vorgespannt sind.

22. Dichtungsanordnung nach den Ansprüchen 19 und 21, dadurch **gekennzeichnet,** daß die Dichtringe (58) durch Stützwinkel (60) versteift sind.

23. Dichtungsanordnung nach den Ansprüchen 1 und 6, dadurch **gekennzeichnet,** daß die Hülse (42) auf dem Bauteil (25) bzw. der Antriebswelle (26) durch mindestens einen Sicherungsring (36) gegen Axialverschiebung gesichert ist.

24. Dichtungsanordnung nach den Ansprüchen 1 oder 21, dadurch **gekennzeichnet,** daß die Dicht- und Abstreiferlippen (52, 49) durch je eine gewundene Druckfeder (53) vorgespannt sind.

25. Dichtungsanordnung nach Anspruch 1, **gekennzeichnet** durch eine Füllung mit Langzeitschmierfett.

26. Dichtungsanordnung nach Anspruch 1, **gekennzeichnet** durch eine einstückige Ausbildung der Gabelhülse (29) mit der Achshalbwelle (27).

## Claims

1. A seal arrangement (24) with seals (46, 47) for rotational and linear movements in order to seal up a movable component (25), for example and input shaft (26), of an articulated axle (1) of a vehicle used for agricultural or construction purposes, whereby the said component (25) is guided through an external chamber (21) into a final drive housing (15) by an axle tube (3), and whereby the seals (46, 47) are combined by means of a sleeve (42) to form a seal set (48), **characterized** in that, the seal set (48) is firmly connected to the moveable component (25), the seals (46, 47) have external sealing and scraper lips (52, 49) and are in contact with a bush (38) which is fixed in position on the axle tube (3) so that when a steering movement is introduced, the seal set (48) is displaced from its position relative to the external chamber (21) which corresponds to straight-ahead driving and is turned in the direction of the internal chamber (20).

2. Seal arrangement in accordance with claim 1, **characterized** in that, the sleeve (42) has a collar (44) facing the external chamber (21).

3. Seal arrangement in accordance with claim 2, **characterized** in that, the collar (44) has an edge (45) which is at an inclined angle towards the external chamber (21).

4. Seal arrangement in accordance with claim 1, **characterized** in that, the seal set (48) consists of a scraper (46) which faces the external chamber (21), and a shaft sealing ring (47) which faces the internal chamber (20) and the external chamber (21).

5. Seal arrangement in accordance with claim 1, **characterized** in that, the sleeve (42) has a flexible internal coating (rubber coating 43).

6. A seal arrangement for sealing up an input shaft (26) of an articulated axle (1) of a vehicle used for agricultural or construction purposes, whereby the said shaft (26) is guided through an external chamber (21) into a final drive housing (15) by an axle tube (3) in accordance with claim 1, **characterized** in that, when a steering movement is introduced, the sleeve (42) is displaced from its position relative to the external chamber (21) which corresponds to straight-ahead driving and is turned in the direction of the internal chamber (20).

7. Seal arrangement in accordance with claim 1 and claim 4, **characterized** in that, the shaft sealing ring (47) has two sealing lips (52) and the scraper (46) has at least one scraper lip (49), and that the distances between the sealing and scraper lips (52, 49), as measured along the longitudinal axis of the component (25), are greater than the linear displacement travel of the component (25).

8. Seal arrangement in accordance with claim 1, **characterized** in that, the bush (38) is a deep drawn part and its internal cylinder (40) is finish-drawn, ground or turned and finish-rolled.

9. Seal arrangement in accordance with claim 8, **characterized** in that, the resistance to wear of the bush (38) is increased by means of various processing treatments.

10. Seal arrangement in accordance with claim 1, **characterized** in that, the bush (38) has an extraction collar (39).

11. Seal arrangement in accordance with claim 10, **characterized** in that, the extraction collar (39) has at least two threaded bores.

12. Seal arrangement in accordance with claim 8, **characterized** in that, the bush (38) has a flexible outer coating.

13. Seal arrangement in accordance with claim 6, **characterized** in that, the input shaft (26) is mounted in a bearing bush (32) near the wall (22) and the bearing bush (32) has a groove (33) with a connection to the internal chamber (20 or 17).

14. Seal arrangement in accordance with one or more of claims 1 and 2 and 4, **characterized** in that, in relation to the longitudinal cross-section of the sleeve (42), the scraper (46) is in contact with the collar (44) of a supporting ring (55) on one side and a leg (56) of the supporting ring (55) on the other side.

15. Seal arrangement in accordance with claim 14, **characterized** in that, the supporting ring (55) is pushed onto the sleeve (42) and fits under the scraper (46).

16. Seal arrangement in accordance with claim 2, **characterized** in that, the collar (44) is formed by a supporting ring (50) which is firmly connected with the sleeve (42) in such a way that a web (51) faces the external chamber (21).

17. Seal arrangement in accordance with claim 1 or claim 16, **characterized** in that, the shaft sealing ring (47) is manufactured in one piece together with the sleeve (42).

18. Seal arrangement in accordance with claim 5 or claim 17, **characterized** in that, a base covering (54) of the shaft sealing ring (47) develops into the flexible internal coating (rubber coating 43).

19. Seal arrangement in accordance with claim 1 to claim 3 and claim 6, **characterized** in that, the individual seals (46, 47) are sealing rings (58) of the same design.

20. Seal arrangement in accordance with claim 19, **characterized** in that, two sealing rings (58) form a V-shaped seal (47 or 46 and 58) and furthermore form the seal set (48) together with another sealing ring (58) positioned an axial distance from the two sealing rings (58).

21. Seal arrangement in accordance with claim 19, **characterized** in that, the sealing and scraper lips (52, 49) of the sealing rings (58) are pre-tensioned by one membrane spring (61) each.

**22.** Seal arrangement in accordance with claim 19 and claim 21, **characterized** in that, the sealing rings (58) are stiffened by support brackets (60).

**23.** Seal arrangement in accordance with claim 1 and claim 6, **characterized** in that, the sleeve (42) is secured onto the component (25) or the input shaft (26) by means of at least one locking ring (36) to prevent it from moving in an axial direction.

**24.** Seal arrangement in accordance with claim 1 or claim 21, **characterized** in that, the sealing and scraper lips (52, 49) are pre-tensioned by one coiled compression spring (53) each.

**25.** Seal arrangement in accordance with claim 1, **characterized** in that, the seal arrangement (24) is filled with long-life lubrication.

**26.** Seal arrangement in accordance with claim 1, **characterized** in that, the fork housing (29) and the axle half shaft (27) are formed as one component.


**Revendications**

**1.** Dispositif d'étanchéité (24) en cassette avec les joints d'étanchéité (46, 47) pour mouvements en rotation et linéaires pour étanchéifier une pièce de construction mobile (25), p.ex.: un arbre d'entraînement (26), un axe articulé (1) d'un véhicule utilisé dans l'agriculture ou sur les chantiers, laquelle pièce de construction (25) est guidée d'un tube d'essieu (3) à une boîte de réduction finale (15) à travers une chambre extérieure (21), les joints d'étanchéité (46, 47) étant réunis par une garniture extérieure d'étanchéité (42) pour constituer un jeu de joints d'étanchéité (48), ainsi **caractérisé** en ce que le jeu de joints 'd'étanchéité (48) est relié fermement à la pièce de construction (25) déplaçable, **caractérisé** en ce que les joints (46, 47) s'appliquent avec les lèvres d'étanchéité et de raclage (52, 49) extérieures contre une boîte de glissement (38), qui est solidaire du tube d'essieu (3) de telle manière que le jeu de joints d'étanchéité (48) se déplace dans la direction de la chambre intérieure (20) quand un mouvement de braquage est amorcé àpartir de sa position relative concernant la chambre extérieure (21), correspondant à la marche en ligne droite.

**2.** Dispositif d'étanchéité selon la revendication 1, **caractérisé** en ce que la garniture d'étanchéité extérieure (42) présente un épaulement (44), qui est tourné vers la chambre extérieure (21)

**3.** Dispositif d'étanchéité selon la revendication 2, **caractérisé** en ce que l'épaulement (44) présente un rebord (45) dirigé obliquement dans la direction sur la chambre extérieure (21).

**4.** Dispositif d'étanchéité selon la revendication 1, **caractérisé** en ce que le jeu de joints d'étanchéité (48) est constitué par un joint racleur (46), qui est tourné vers la chambre extérieure (21) et d'une bague d'étanchéité (47), qui est tournée vers la chambre intérieure (20) et la chambre extérieure (21).

**5.** Dispositif d'étanchéité selon la revendication 1, **caractérisé** en ce que la garniture d'étanchéité extérieure (42) présente un revêtement élastique intérieur (couche de gomme 43).

**6.** Dispositif d'étanchéité pour rendre étanche un arbre d'entraînement (26) d'un essieu articulé (1) d'un véhicule àusage agricole ou de chantier, qui est guidé d'un tube d'essieu (3) à travers une chambre extérieure (21) à une boîte de réduction finale (15), **caractérisé** en ce que la garniture d'étanchéité extérieure (42) est déplacée dans la direction vers la chambre intérieure (17 respectivement 20) quand un mouvement de braquage est amorcé à partir de sa position relative concernant la chambre extérieure (21), correspondant à la marche en ligne droite.

**7.** Dispositif d'étanchéité selon les revendications 1 et 4, **caractérisé** en ce que la bague d'étanchéité (47) présente deux lèvres d'étanchéité (52) et le joint racleur (46) présente au moins une lèvre racleuse (49) et que - par rapport à la direction longitudinale de la pièce de construction (25) - les distances des lèvres d'étanchéité et de raclage (52, 49) sont plus grandes que la course de déplacement linéaire de la pièce de construction (25).

**8.** Dispositif d'étanchéité selon la revendication 1, **caractérisé** en ce que la boîte de glissement (38) est une pièce d'emboutissage, dont le cylindre intérieur (40) est embouti fini, rectifié ou usiné au tour et poli aux galets de pression.

9. Dispositif d'étanchéité selon la revendication 8, **caractérisé** en ce que la résistance à l'usure de la boîte de glissement (38) est augmentée par des procédés de traitement appropriés.

10. Dispositif d'étanchéité selon la revendication 1, **caractérisé** en ce que la boîte de glissement (38) présente un collet rectifié (39).

11. Dispositif d'étanchéité selon la revendication 10, **caractérisé** en ce que le collet rectifié (39) présente au moins deux taraudages.

12. Dispositif d'étanchéité selon la revendication 8, **caractérisé** en ce que la boîte de glissement (38) présente un revêtement élastique extérieur.

13. Dispositif d'étanchéité selon la revendication 6, **caractérisé** en ce que l'arbre d'entraînement (26) est monté, dans la zone de la paroi (22), dans un coussinet (32), qui présente une rainure (33) avec une liaison vers la chambre intérieure (20 respectivement 17).

14. Dispositif d'étanchéité selon les revendications 1, 2 et 4, **caractérisé** en ce que le joint racleur (46) - par rapport à la section longitudinale de la garniture d'étanchéité extérieure (42) -, s'appuie, d'un côté, sur l'épaulement (44), et de l'autre côté, sur un côté (56) d'une bague d'appui (55).

15. Dispositif d'étanchéité selon la revendication 14, **caractérisé** en ce que la bague d'appui (55) est poussée sur la garniture d'étanchéité extérieure (42) et qu'elle accroche le joint racleur (46) par en dessous.

16. Dispositif d'étanchéité selon la revendication 2, **caractérisé** en ce que l'épaulement (44) est formé par une bague d'appui (50), qui est reliée solidement à la garniture d'étanchéité extérieure (42) de telle manière qu'un dos (51) est orienté vers la chambre extérieure (21).

17. Dispositif d'étanchéité selon les revendications 1 ou 16, **caractérisé** en ce que la bague d'étanchéité (47) est fabriquée d'une seule pièce avec la garniture d'étanchéité extérieure (42).

18. Dispositif d'étanchéité selon les revendications 5 et 17, **caractérisé** en ce qu'une enveloppe de base (54) de la bague d'étanchéité (47) passe dans le revêtement intérieur élastique (couche de gomme 43).

19. Dispositif d'étanchéité selon les revendications 1 à 3 et 6, **caractérisé** en ce que les divers joints (46, 47) sont des joints d'étanchéité de construction identique (58).

20. Dispositif d'étanchéité selon la revendication 19, **caractérisé** en ce que deux joints d'étanchéité (58) constituent un joint en forme de V (47 respectivement 46 et 58), qui forme le jeu de joints (48) avec un autre joint d'étanchéité (58), disposé avec écartement axial.

21. Dispositif d'étanchéité selon la revendication 19, **caractérisé** en ce que les lèvres d'étanchéité et de raclage (52, 49) des joints d'étanchéité (58) sont chacune soumises à la tension initiale d'un ressort à lamelles (61).

22. Dispositif d'étanchéité selon les revendications 19 et 21, **caractérisé** en ce que les joints d'étanchéité (58) sont raidis par les cornières d'appui (60).

23. Dispositif d'étanchéité selon les revendications 1 et 6, **caractérisé** en ce que la garniture d'étanchéité extérieure (42) est assurée contre le décalage axial sur la pièce de construction (25) respectivement l'arbre d'entraînement (26) par au moins un circlips (36).

24. Dispositif d'étanchéité selon les revendications 1 ou 21, **caractérisé** en ce que les lèvres d'étanchéité et de raclage (52, 49) sont soumises à une tension initiale, chacune par un ressort de pression (53) à torsion.

25. Dispositif d'étanchéité selon la revendication 1, **caractérisé** par un remplissage de graisse de lubrification de longue durée.

26. Dispositif d'étanchéité selon la revendication 1, **caractérisé** par une formation d'une seule pièce de la cage annulaire (29) avec le demi-arbre d'essieu (27).

FIG.1

FIG.2

FIG.2A

FIG.3

FIG.4

FIG.5

FIG.6

FIG.7

FIG.8